# EUROPÄISCHE PATENTANMELDUNG

(11) **EP 0 573 025 A1**
(43) Veröffentlichungstag der Anmeldung: **08.12.1993**
(21) Anmeldenummer: 93108896.7
(22) Anmeldetag: 03.06.1993
(51) Int. Cl.: B60B 29/00

(54) **Schraubenschlüssel für die Radmuttern eines Kraftfahrzeugs**

(30) Priorität: 05.06.1992 DE 9207664 U
(71) Anmelder: Kleer, Uwe Dr., W-66578 Schiffweiler (DE); Marincel, Mario, W-55606 Kirn (DE); Wagner, Eugen, 66578 Schiffweiler (DE)
(72) Erfinder: Marincel, Mario, D-6570 Kirn (DE); Wagner, Eugen, D-6685 Schiffweiler (DE)
(74) Vertreter: Bernhardt, Winfrid, Dr.-Ing.

(57) **Zusammenfassung**

Der Schraubenschlüssel ist gekennzeichnet durch ein Untersetzungsgetriebe (1-8), an dessen Antriebswelle (2) eine Handkurbel (10) angeordnet ist, an dessen Abtriebswelle (3) eine auf die Radmutter passende Nuß (12) angeordnet ist und dessen Gehäuse (1) mit einer Drehmomentstütze (14) solcher Länge versehen ist, daß sie bei Betätigung des Schraubenschlüssels in schräger Stellung auf dem Boden aufsetzt. Die Handkurbel (10) und die Nuß (12) sitzen abnehmbar auf der Antriebs- (2) bzw. Abtriebswelle (3) und sind gegeneinander austauschbar. Das Untersetzungsgetriebe (1-8) weist ein Untersetzungsverhältnis von 1 : 3 bis 1 : 8, vorzugsweise 1 : 4 bis 1 : 6, auf.

Mit diesem Schraubenschlüssel kann auch eine besonders fest sitzende Radmutter leicht gelöst werden. Sie kann darüber hinaus im Anschluß an das Lösen sehr schnell vollständig abgezogen werden, indem dann umgekehrt eine Anwendung als Übersetzungsgetriebe vorgenommen wird.

## Beschreibung

Die Erfindung betrifft einen Schraubenschlüssel für die Radmuttern eines Kraftfahrzeugs.

Es liegt ihr die Aufgabe zugrunde, das Wechseln eines Rades zu erleichtern.

Gemäß der Erfindung wird dieser Zweck erfüllt durch einen Schraubenschlüssel mit einem Untersetzungsgetriebe, an dessen Antriebswelle eine Handkurbel angeordnet ist, an dessen Abtriebswelle eine auf die Radmutter passende Nuß angeordnet ist und dessen Gehäuse mit einer Drehmomentstütze solcher Länge versehen ist, daß sie bei Betätigung des Schraubenschlüssels in schräger Stellung auf dem Boden aufsetzt.

Mit diesem Schraubenschlüssel kann auch eine besonders fest sitzende Radmutter leicht gelöst werden.

Sie kann darüber hinaus nach einer vorteilhaften Weiterbildung der Erfindung, die Austauschbarkeit der Handkurbel gegen die Nuß vorsieht, im Anschluß an das Lösen sehr schnell vollständig abgezogen werden, indem dann umgekehrt eine Anwendung als Übersetzungsgetriebe vorgenommen wird.

Das geeignete Untersetzungsverhältnis dürfte zwischen 1:3 und 1:8, vorzugsweise zwischen 1:4 und 1:6 liegen.

Die Zeichnungen geben ein Ausführungsbeispiel der Erfindung wieder.

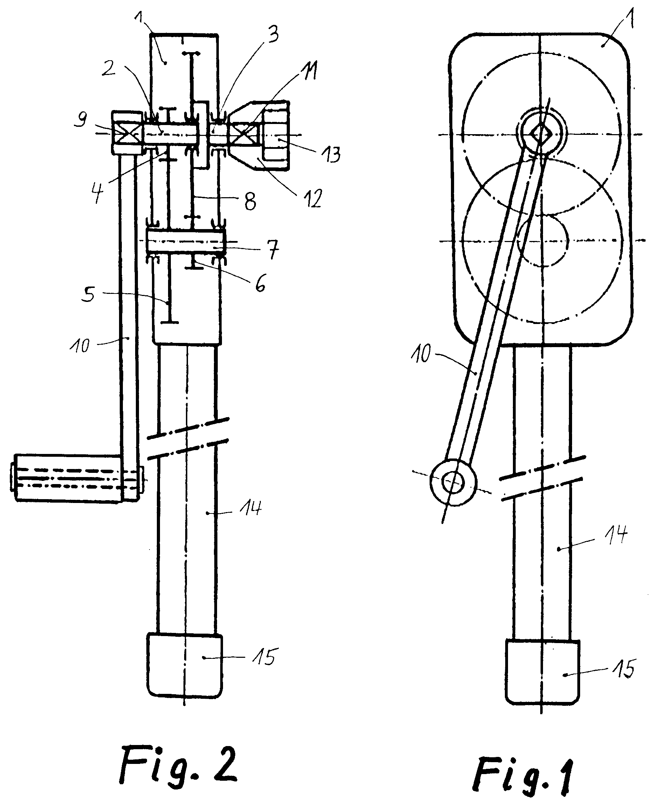

- Fig. 1: zeigt einen Schraubenschlüssel für Radmuttern in Ansicht,
- Fig. 2: zeigt den Schraubenschlüssel, schematisiert, im Längsschnitt.

In einem Getriebegehäuse 1 sind eine Antriebswelle 2 und eine Abtriebswelle 3 miteinander fluchtend gelagert. Ein auf der Antriebswelle 2 sitzendes Ritzel 4 kämmt mit einem Zahnrad 5, das zusammen mit einem zweiten Ritzel 6 auf einer dritten in dem Getriebegehäuse 1 gelagerten Welle 7 sitzt. Das zweite Ritzel 6 greift in ein auf der Abtriebswelle 3 angeordnetes zweites Zahnrad 8.

Auf einem Vierkant 9 der Antriebswelle 2 steckt eine Handkurbel 10, auf einem Vierkant 11 der Abtriebswelle 3 eine Nuß 12 mit einer auf eine Radmutter passenden Ausnehmung 13. Beide sind gegeneinander austauschbar.

Mit dem Getriebegehäuse 1 starr verbunden ist eine Drehmomentstütze in Form einer hohlen Stange 14, die am Ende mit einer Kappe 15 z.B. aus einem weich-elastischen Material versehen ist.

Funktion und Gebrauch der Vorrichtung gehen aus der vorstehenden Beschreibung und den weiter oben gegebenen Erläuterungen hervor.

## Patentansprüche

1. Schraubenschlüssel für die Radmuttern eines Kraftfahrzeugs, gekennzeichnet durch ein Untersetzungsgetriebe (1-8), an dessen Antriebswelle (2) eine Handkurbel (10) angeordnet ist, an dessen Abtriebswelle (3) eine auf die Radmutter passende Nuß (12) angeordnet ist und dessen Gehäuse (1) mit einer Drehmomentstütze (14) solcher Länge versehen ist, daß sie bei Betätigung des Schraubenschlüssels in schräger Stellung auf dem Boden aufsetzt.

2. Schraubenschlüssel nach Anspruch 1,
dadurch gekennzeichnet,
daß die Handkurbel (10) und die Nuß (12) abnehmbar auf der Antriebs- (2) bzw. Abtriebswelle (3) sitzen und gegeneinander austauschbar sind.

3. Schraubenschlüssel nach Anspruch 1 oder 2,
dadurch gekennzeichnet,
daß das Untersetzungsgetriebe (1-8) ein Untersetzungsverhältnis von 1:3 bis 1:8, vorzugsweise 1:4 bis 1:6, aufweist.
